# EUROPEAN PATENT APPLICATION

(11) **EP 4 772 413 A1**
(43) Date of publication of application: **08.07.2026**
(21) Application number: 24762425.7
(22) Date of filing: 05.08.2024
(51) Int. Cl.: B60W 30/17, B60W 30/18, B60W 30/04

(54) **CONTROL DEVICE AND CONTROL METHOD**

(30) Priority: 30.08.2023 JP 2023140581
(71) Applicant: Robert Bosch GmbH, 70442 Stuttgart (DE)
(72) Inventor: ONISHI, Yoshitsuna, Yokohama-shi, Kanagawa 224-8501 (JP); OSHIDA, Yuki, Yokohama-shi, Kanagawa 224-8501 (JP)
(74) Representative: Isarpatent
(86) International application number: PCT/IB2024/057552
(87) International publication number: WO 2025/046349

(57) **Abstract**

The present invention obtains a control device and a control method capable of improving the safety of a lean vehicle. In a control device (20) and a control method according to the present invention, an execution section (22) of the control device (20) executes a positional relationship adjustment operation of adjusting a positional relationship between the lean vehicle (1) and an object so as to be a target positional relationship, based on surrounding environment information on the lean vehicle (1), in which the execution section executes, in an executable state of an automatic stop operation of causing the lean vehicle (1) automatically decelerated by the positional relationship adjustment operation to automatically reach a stop, a deceleration suppression operation that is an operation of suppressing deceleration of the lean vehicle (1) more when posture stability information is information indicating that posture stability in a process in which the lean vehicle (1) automatically reaches the stop is low than when the posture stability information is information indicating that the posture stability is high.

## Description

### Technical Field

This disclosure relates to a control device and a control method capable of improving the safety of a lean vehicle.

### Background Art

Conventionally, various kinds of techniques that support the driving of lean vehicles such as motorcycles by riders have been proposed. For example, PTL 1 discloses a driver support system that warns, based on information detected by a sensor apparatus that detects an obstacle present in a traveling direction or substantially present in the traveling direction, a rider of a motorcycle about an inappropriate approach to the obstacle.

### Citation List

### Patent Literature

PTL 1: JP2009-116882A

### Summary of Invention

### Technical Problem

Meanwhile, as techniques for supporting the driving of vehicles, there is a positional relationship adjustment operation of adjusting a positional relationship between a vehicle and an object so as to be a target positional relationship. In addition, there is a technique of executing an automatic stop operation of causing a lean vehicle automatically decelerated by the positional relationship adjustment operation to automatically reach a stop. Further, it can be considered that such the positional relationship adjustment operation and the automatic stop operation are applied to lean vehicles. Here, unlike a four-wheeled automobile and the like, the lean vehicle can fall down in a roll direction due to the empty weight. Therefore, it is desired to prevent a fall of the lean vehicle with the automatic stop operation, and improve the safety.

The present invention is made in view of the abovementioned problems, and obtains a control device and a control method capable of improving the safety of a lean vehicle.

### Solution to Problem

A control device according to the present invention is a control device that controls a behavior of a lean vehicle, the control device including: an execution section that executes a positional relationship adjustment operation of adjusting a positional relationship between the lean vehicle and an object so as to be a target positional relationship, based on surrounding environment information on the lean vehicle, in which the execution section executes, in an executable state of an automatic stop operation of causing the lean vehicle automatically decelerated by the positional relationship adjustment operation to automatically reach a stop, a deceleration suppression operation that is an operation of suppressing deceleration of the lean vehicle more when posture stability information is information indicating that posture stability in a process in which the lean vehicle automatically reaches the stop is low than when the posture stability information is information indicating that the posture stability is high.

A control method according to the present invention is a control method of controlling a behavior of a lean vehicle, the control method including: executing, by an execution section of a control device, a positional relationship adjustment operation of adjusting a positional relationship between the lean vehicle and an object so as to be a target positional relationship, based on surrounding environment information on the lean vehicle, in which the execution section executes, in an executable state of an automatic stop operation of causing the lean vehicle automatically decelerated by the positional relationship adjustment operation to automatically reach a stop, a deceleration suppression operation that is an operation of suppressing deceleration of the lean vehicle more when posture stability information is information indicating that posture stability in a process in which the lean vehicle automatically reaches the stop is low than when the posture stability information is information indicating that the posture stability is high.

### Advantageous Effects of Invention

In a control device and a control method according to the present invention, an execution section of the control device executes a positional relationship adjustment operation of adjusting a positional relationship between the lean vehicle and an object so as to be a target positional relationship, based on surrounding environment information on the lean vehicle, in which the execution section executes, in an executable state of an automatic stop operation of causing the lean vehicle automatically decelerated by the positional relationship adjustment operation to automatically reach a stop, a deceleration suppression operation that is an operation of suppressing deceleration of the lean vehicle more when posture stability information is information indicating that posture stability in a process in which the lean vehicle automatically reaches the stop is low than when the posture stability information is information indicating that the posture stability is high. Accordingly, in the executable state of the automatic stop operation, the speed of the lean vehicle can be adjusted in accordance with the posture stability of the lean vehicle. Therefore, the fall of the lean vehicle with the automatic stop operation can be suppressed in accordance with the posture stability of the lean vehicle. Therefore, the safety of the lean vehicle can be improved.

### Brief Description of Drawings

Fig. 1 is a schematic diagram illustrating a schematic configuration of a lean vehicle according to an embodiment of the present invention.
Fig. 2 is a block diagram illustrating one example of a function configuration of a control device according to the embodiment of the present invention.
Fig. 3 is a flowchart illustrating one example of a flow of first processing that is performed by the control device according to the embodiment of the present invention.
Fig. 4 is a flowchart illustrating one example of a flow of second processing that is performed by the control device according to the embodiment of the present invention.
Fig. 5 is a flowchart illustrating one example of a flow of third processing that is performed by the control device according to the embodiment of the present invention. Description of Embodiments

Hereinafter, an embodiment of a control device and a control method according to the present invention will be described with reference to the drawings.

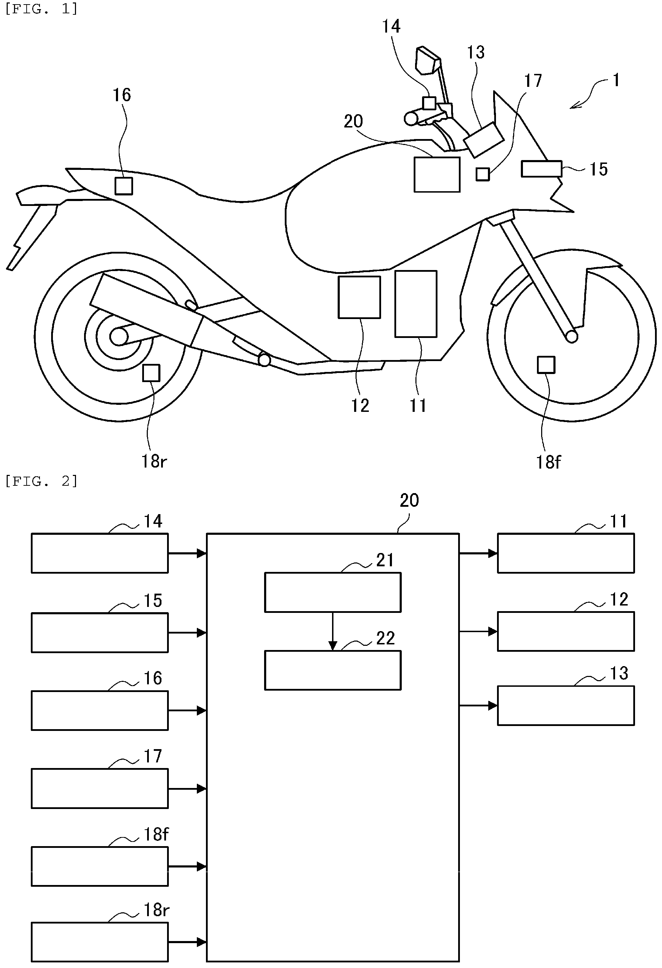

Note that, although a control device that is used in a two-wheeled motorcycle is described below (see a lean vehicle 1 in Fig. 1), a vehicle to be controlled by the control device according to the present invention only needs to be a lean vehicle, and may be another lean vehicle than the two-wheeled motorcycle. The lean vehicle indicates a vehicle in which the vehicle body falls on the right side in turning traveling in the right direction, and the vehicle body falls on the left side in turning traveling in the left direction. The lean vehicle includes, for example, motorcycles (a two-wheeled motor vehicle and a three-wheeled motor vehicle), and a bicycle. The motorcycle includes a vehicle that uses an engine as a power source, a vehicle that uses an electric motor as a power source, and the like. The motorcycle includes, for example, a motorbike, a scooter, and an electric scooter. The bicycle indicates a vehicle capable of traveling on a road by a pedal force of a rider that is applied to pedals. The bicycle includes a usual bicycle, an electric assist bicycle, an electric bicycle, and the like.

Moreover, although a case where an engine (specifically, an engine 11 in Fig. 1, which is described later) is mounted as a drive source capable of outputting power for driving drive wheels is described in the following, another drive source (for example, electric motor) than the engine may be mounted as a drive source, or a plurality of drive sources may be mounted.

Moreover, hereinafter, although a case where a control unit (specifically, a hydraulic pressure control unit 12 in Fig. 1, which is described later) that controls the hydraulic pressure in a brake fluid is employed, as a control unit of a braking force that is generated to wheels, is described, a control unit (so-called brake by wire) that controls a position of a braking unit itself of the wheel with an electric signal may be employed as the control unit of the braking force generated to the wheels.

Moreover, the configuration, the operation, and the like to be described in the following are examples, and the control device and the control method according to the present invention are not limited to the case having such the configuration, the operation, and the like.

Moreover, hereinafter, the same or similar descriptions are simplified or omitted as appropriate. Moreover, in the respective drawings, as for the same or similar members or portions, assigning reference numerals thereto is omitted, or the same reference numerals are assigned thereto. Moreover, detailed structures are simplified or omitted as appropriate.

### <Configuration of Lean Vehicle>

With reference to Figs. 1 and 2, a configuration of the lean vehicle 1 according to the embodiment of the present invention will be described.

Fig. 1 is a schematic diagram illustrating a schematic configuration of the lean vehicle 1. The lean vehicle 1 is a two-wheeled motorcycle corresponding to one example of a lean vehicle according to the present invention. As illustrated in Fig. 1, the lean vehicle 1 is provided with the engine 11, the hydraulic pressure control unit 12, a display device 13, an input device 14, a surrounding environment sensor 15, an inertial measurement device (IMU) 16, a steering angle sensor 17, a front-wheel wheel speed sensor 18f, a rear-wheel wheel speed sensor 18r, and a control device (ECU) 20. The lean vehicle 1 is a vehicle in which self-standing is impossible in a stop state. In other words, a rider gets his/her foot on the road surface to support the lean vehicle 1 in a stop state, thereby maintaining an upright state of the lean vehicle 1. Note that, the lean vehicle 1 may be a vehicle in which self-standing is possible in a stop state.

The engine 11 corresponds to one example of a drive source of the lean vehicle 1, and is capable of outputting power for driving a drive wheel (specifically, a rear wheel) . For example, the engine 11 is provided with one or a plurality of cylinders in which a combustion chamber is formed in an inside thereof, a fuel injection valve that injects fuel toward the combustion chamber, and an ignition plug. The fuel is injected from the fuel injection valve to form an air-fuel mixture containing air and fuel in the combustion chamber, and the air-fuel mixture is ignited by the ignition plug and burns. Accordingly, a piston provided in the cylinder reciprocates, and a crankshaft rotates. Moreover, a throttle valve is provided in an air-intake pipe of the engine 11 to change the air-intake quantity to the combustion chamber in accordance with the opening degree of throttle that is the opening degree of the throttle valve.

The hydraulic pressure control unit 12 is a unit that has a function of controlling a braking force that is generated to the wheel. For example, the hydraulic pressure control unit 12 is provided on an oil passage that connects a master cylinder to a wheel cylinder, and includes components (for example, a control valve and a pump) for controlling a brake hydraulic pressure of the wheel cylinder. The operation of the component in the hydraulic pressure control unit 12 is controlled to control a braking force to be generated to the wheel. Note that, the hydraulic pressure control unit 12 may respectively control braking forces to be generated to both of a front wheel and a rear wheel, or may control the braking force to be generated to only one of the front wheel and the rear wheel.

The display device 13 has a display function of visually displaying information. Examples of the display device 13 can include a liquid crystal display. The display device 13 is provided in front of handlebars in the lean vehicle 1, for example. Further, an arrangement of the display device 13 with respect to the vehicle body is not specially limited.

The input device 14 receives various kinds of operations by a rider. The input device 14 is provided to the handlebars, for example, and includes a push button and the like that are used in the operation by the rider. Information related to the operation by the rider using the input device 14 is output to the control device 20.

The surrounding environment sensor 15 detects surrounding environment information related to an environment in the surrounding of the lean vehicle 1. Specifically, the surrounding environment sensor 15 is provided to a front part of the lean vehicle 1, and detects surrounding environment information in front of the lean vehicle 1. The surrounding environment information detected by the surrounding environment sensor 15 is output to the control device 20.

The surrounding environment information that is detected by the surrounding environment sensor 15 may be information (for example, a relative position, a relative distance, a relative speed, or a relative acceleration) related to a distance to or an orientation of a subject that is positioned in the periphery of the lean vehicle 1, or may be characteristics (for example, a type of the subject, a shape of the subject itself, and a mark assigned to the subject) of a subject that is positioned in the periphery of the lean vehicle 1. The surrounding environment sensor 15 may be, for example, a radar, a Lidar sensor, an ultrasonic sensor, or a camera.

Note that, surrounding environment information can be detected by a surrounding environment sensor that is mounted to another vehicle or an infrastructure facility. In other words, the control device 20 can also acquire surrounding environment information via the wireless communication with another vehicle or the infrastructure facility.

The inertial measurement device 16 is provided with a three-axis gyro sensor and a three-direction acceleration sensor, and detects a posture of the lean vehicle 1. The inertial measurement device 16 is provided to the body of the lean vehicle 1, for example. For example, the inertial measurement device 16 detects a lean angle of the lean vehicle 1, and outputs a detection result. The inertial measurement device 16 may detect another physical quantity that can be substantially converted into the lean angle of the lean vehicle 1. The lean angle corresponds to an angle indicating an inclination of the vehicle body (specifically, body) of the lean vehicle 1 in the roll direction with respect to the vertical upward direction. The inertial measurement device 16 may be provided with parts of the three-axis gyro sensor and the three-direction acceleration sensor.

The steering angle sensor 17 detects a steering angle of the lean vehicle 1. For example, the steering angle sensor 17 detects a steering angle of the handlebars of the lean vehicle 1, as a steering angle of the lean vehicle 1. The steering angle of the lean vehicle 1 is, for example, an angle between a front surface direction of the vehicle body and a front surface direction of the handlebars, of the lean vehicle 1. Note that, the steering angle of the lean vehicle 1 may indicate a steering angle of a tire of the lean vehicle 1.

The front-wheel wheel speed sensor 18f is a wheel speed sensor that detects a wheel speed of the front wheel (for example, a rotational frequency [rpm] per unit time or a movement distance [km/h] per unit time, or the like of the front wheel), and outputs a detection result. The front-wheel wheel speed sensor 18f may detect another physical quantity that can be substantially converted into the wheel speed of the front wheel. The front-wheel wheel speed sensor 18f is provided to the front wheel.

The rear-wheel wheel speed sensor 18r is a wheel speed sensor that detects a wheel speed of the rear wheel (for example, a rotational frequency [rpm] per unit time or a movement distance [km/h] per unit time, or the like of the rear wheel), and outputs a detection result. The rear-wheel wheel speed sensor 18r may detect another physical quantity that can be substantially converted into the wheel speed of the rear wheel. The rear-wheel wheel speed sensor 18r is provided to the rear wheel.

The control device 20 controls a behavior of the lean vehicle 1. For example, a part or all of the control device 20 includes a microcomputer, a microprocessor unit, a memory, and the like. Moreover, for example, a part or all of the control device 20 may include one whose firmware and the like can be updated, and may be a program module or the like that is executed by a command from a CPU or the like. The control device 20 may be one control device 20 or may be divided into a plurality of the control devices 20, for example.

Fig. 2 is a block diagram illustrating one example of a function configuration of the control device 20. As illustrated in Fig. 2, the control device 20 is provided with, for example, an acquisition section 21 and an execution section 22. Moreover, the control device 20 communicates with the respective devices of the lean vehicle 1.

The acquisition section 21 acquires information from the respective devices of the lean vehicle 1, and outputs the information to the execution section 22. For example, the acquisition section 21 acquires information from the input device 14, the surrounding environment sensor 15, the inertial measurement device 16, the steering angle sensor 17, the front-wheel wheel speed sensor 18f, and the rear-wheel wheel speed sensor 18r. Note that, in the present description, the acquisition of information can include the extraction, the creation (for example, calculation), and the like of the information.

The execution section 22 executes various kinds of control by controlling operations of the respective devices of the lean vehicle 1. The execution section 22 controls, for example, operations of the engine 11, the hydraulic pressure control unit 12, and the display device 13.

Here, the execution section 22 can execute a positional relationship adjustment operation based on surrounding environment information on the lean vehicle 1. The positional relationship adjustment operation is an operation of adjusting a positional relationship between the lean vehicle 1 and an object (for example, target vehicle) so as to be a target positional relationship. Specifically, in the positional relationship adjustment operation, the execution section 22 can adjust the positional relationship between the lean vehicle 1 and an object so as to be a target positional relationship by automatically controlling the speed of the lean vehicle 1. Note that, hereinafter, an example in which the abovementioned object is a target vehicle will be mainly described, but the abovementioned object is not limited to a target vehicle, but may be a signal, for example.

Hereinafter, as a control mode in which the positional relationship adjustment operation is performed, an example in which the execution section 22 executes adaptive cruise control will be described. Further, the positional relationship adjustment operation only needs to be an operation of adjusting the positional relationship between the lean vehicle 1 and an object so as to be a target positional relationship, and may be performed in a control mode other than the adaptive cruise control. For example, the positional relationship adjustment operation may be performed in a control mode that is not canceled even if an accelerator operation by the rider is performed, and the target positional relationship may change in accordance with the operation amount of the accelerator operation.

In the adaptive cruise control, the execution section 22 automatically controls the speed of the lean vehicle 1, independent of an acceleration-deceleration operation (in other words, the accelerator operation and a brake operation) by the rider. The execution section 22 can control the speed of the lean vehicle 1, based on information on the speed of the lean vehicle 1 that is acquired based on the wheel speed of the front wheel and the wheel speed of the rear wheel, for example.

In the adaptive cruise control, for example, a target inter-vehicle distance that is a target value of an inter-vehicle distance between the lean vehicle 1 and the target vehicle is set, and the execution section 22 controls the speed of the lean vehicle 1 such that the inter-vehicle distance between the lean vehicle 1 and the target vehicle becomes the target inter-vehicle distance. In other words, a positional relationship in which the inter-vehicle distance between the lean vehicle 1 and the target vehicle becomes the target inter-vehicle distance corresponds to the target positional relationship. Note that, the inter-vehicle distance may indicate a distance in a direction along a lane (specifically, a traveling lane of the lean vehicle 1), or may indicate a straight-line distance. For example, the acquisition section 21 acquires an inter-vehicle distance between the lean vehicle 1 and the target vehicle based on surrounding environment information on the lean vehicle 1, and the execution section 22 can control the speed of the lean vehicle 1 as the above, based on the inter-vehicle distance that is acquired in such a manner.

Further, in the adaptive cruise control, for example, a target passing time difference that is a target value of a passing time difference (specifically, the time to be taken from a current time point until the lean vehicle 1 passes a current position of a target vehicle) is set, and the execution section 22 may control the speed of the lean vehicle 1 such that the passing time difference becomes the target passing time difference. In this case, a positional relationship in which the passing time difference becomes the target passing time difference corresponds to the target positional relationship. For example, the acquisition section 21 acquires a passing time difference based on surrounding environment information on the lean vehicle 1, and the execution section 22 can control the speed of the lean vehicle 1 as the above, based on the passing time difference that is acquired in such a manner.

Note that, for example, in a case where no target vehicle is detected during the execution of the adaptive cruise control, the execution section 22 controls the speed of the lean vehicle 1 so as to be a target speed set in advance. For example, in such a case, no positional relationship adjustment operation is performed.

The execution section 22 starts the adaptive cruise control, with an operation by the rider using the input device 14 as a trigger, for example. Note that, the adaptive cruise control is canceled, for example, in a case where a specific operation such as a brake operation is performed by the rider.

Here, the adaptive cruise control may be canceled with the reduction in the speed of the lean vehicle 1. Meanwhile, in the embodiment, the adaptive cruise control that is executed by the execution section 22 is a control mode in which the cancelation caused by the reduction in the speed of the lean vehicle 1 is not performed. Therefore, in the embodiment, the execution section 22 can cause the lean vehicle 1 to automatically stop and start, in the adaptive cruise control.

For example, the execution section 22 sequentially executes a stop phase that causes the lean vehicle 1 to automatically decelerate and stop and a start phase that causes the lean vehicle 1 to automatically start, in the adaptive cruise control. Note that, the execution section 22 only needs to be able to execute at least the stop phase, and does not necessarily need to be able to execute the start phase.

In the stop phase, the lean vehicle 1 automatically stops. The execution section 22 can execute an automatic stop operation of causing the lean vehicle 1 automatically decelerated by the positional relationship adjustment operation to automatically reach a stop. A process in which the lean vehicle 1 automatically reaches the stop by the automatic stop operation corresponds to the stop phase. For example, in a case where the target vehicle has decelerated and stopped, the execution section 22 continuously executes the positional relationship adjustment operation such that the inter-vehicle distance between the lean vehicle 1 and the target vehicle becomes the target inter-vehicle distance, and as a result, the lean vehicle 1 automatically decelerates and stops.

Hereinafter, an example in which the automatic stop operation is an operation of causing the lean vehicle 1 to automatically decelerate and stop by the positional relationship adjustment operation will be described. Further, as is described later, the automatic stop operation is not limited to the example, but may be an operation in which no positional relationship adjustment operation is performed under a part of the situation, or may be an operation of causing the lean vehicle 1 to stop only when the rider has performed a specific operation.

Note that, from the viewpoint of suppressing a movement (for example, sliding down due to an empty weight) of the lean vehicle 1 being stopped, the execution section 22 preferably executes braking maintenance control that maintains a state where a braking force is automatically applied to the lean vehicle 1 being stopped. The execution section 22 can control a braking force to be applied to the lean vehicle 1 by controlling the operation of the hydraulic pressure control unit 12, for example, in the braking maintenance control.

In the start phase, the lean vehicle 1 automatically starts. The execution section 22 acquires a start trigger signal based on surrounding environment information on the lean vehicle 1, for example, and causes the lean vehicle 1 to perform the automatic start with the acquisition of the start trigger signal, in the start phase. For example, in a case where a stopped target vehicle has started, the execution section 22 acquires a start trigger signal based on the surrounding environment information on the lean vehicle 1, and causes the lean vehicle 1 to perform the automatic start such that the inter-vehicle distance between the lean vehicle 1 and the target vehicle is maintained to the target inter-vehicle distance.

Further, the execution section 22 may acquire a start trigger signal by considering whether the rider has performed a specific operation in the start phase. For example, the execution section 22 may acquire a start trigger signal in a case where the execution section 22 determines that the stopped target vehicle has started based on the surrounding environment information, and the rider has performed a specific operation using the input device 14. Moreover, the abovementioned specific operation may be an acceleration operation (for example, an operation of rotating an accelerator grip to the acceleration side, or the like) by the rider.

### <Operation of Control Device>

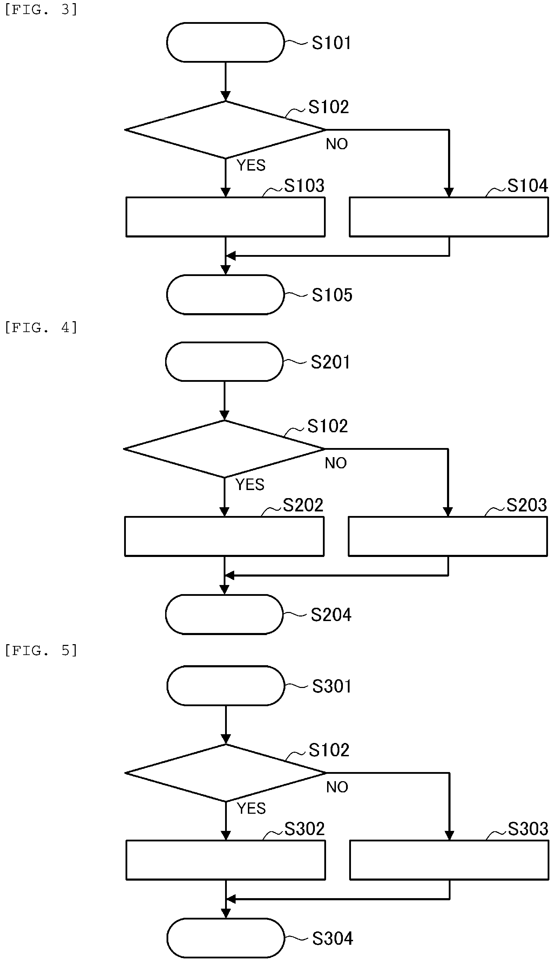

With reference to Figs. 3 to 5, an operation of the control device 20 according to the embodiment of the invention will be described.

As mentioned above, the execution section 22 of the control device 20 can execute the automatic stop operation of causing the lean vehicle 1 automatically decelerated by the positional relationship adjustment operation to automatically reach a stop, in the adaptive cruise control. Here, unlike a four-wheeled automobile and the like, the lean vehicle 1 can fall down in the roll direction due to the empty weight. Therefore, it is desired to suppress a fall of the lean vehicle 1 with the automatic stop operation, and improve the safety.

Therefore, in the embodiment, in an executable state of the automatic stop operation, the execution section 22 of the control device 20 executes a deceleration suppression operation that is an operation of suppressing the deceleration of the lean vehicle 1 more in a case where posture stability information, which is information indicating the posture stability in a process in which the lean vehicle 1 automatically reaches a stop, is information indicating that the posture stability is low than in a case where the posture stability information is information indicating that posture stability is high. This implements an improvement in safety of the lean vehicle 1, as is described later. Hereinafter, as an example of the processing related to the deceleration suppression operation among the processing that is performed by the control device 20, first processing, second processing, and third processing will be sequentially described.

Fig. 3 is a flowchart illustrating one example of a flow of the first processing that is performed by the control device 20. Step S101 in Fig. 3 corresponds to a start of a control flow illustrated in Fig. 3. Step S105 in Fig. 3 corresponds to an end of the control flow illustrated in Fig. 3. The control flow illustrated in Fig. 3 is repeatedly executed with a set time interval, for example, in an executable state of the automatic stop operation. For example, the control flow illustrated in Fig. 3 is repeatedly executed during the execution of the adaptive cruise control. In particular, the control flow illustrated in Fig. 3 may be executed under a situation in which the lean vehicle 1 automatically decelerates by the positional relationship adjustment operation, during the execution of the adaptive cruise control.

When the control flow illustrated in Fig. 3 is started, at Step S102, the execution section 22 determines whether the posture stability information is information indicating that the posture stability of the lean vehicle 1 is higher than a reference.

As mentioned above, the posture stability information is information indicating the posture stability in the process in which the lean vehicle 1 automatically reaches the stop. For example, the acquisition section 21 acquires posture stability information, and Step S102 is performed using the posture stability information acquired by the acquisition section 21. In particular, the acquisition section 21 acquires posture stability information in an executable state of the automatic stop operation (for example, a state where the lean vehicle 1 automatically decelerates by the positional relationship adjustment operation). Therefore, the acquisition section 21 can acquire information indicating the posture stability in the process in which the lean vehicle 1 automatically reaches the stop, as posture stability information. As the posture stability of the lean vehicle 1 is lower, a fall of the lean vehicle 1 with the automatic stop operation is more likely to occur. Therefore, in the embodiment, as is described later, in a case where the posture stability of the lean vehicle 1 is lower than the reference, the deceleration suppression operation is executed, thereby increasing the safety of the lean vehicle 1.

The reference at Step S102 is set so as to be able to determine the likelihood of a fall of the lean vehicle 1 occurring with the automatic stop operation in a case where no deceleration suppression operation is executed, for example. The case where the posture stability of the lean vehicle 1 is higher than the reference corresponds to a case where even if no deceleration suppression operation has been executed, no fall of the lean vehicle 1 with the automatic stop operation is assumed to occur. On the other hand, the case where the posture stability of the lean vehicle 1 is lower than the reference corresponds to a case where a fall of the lean vehicle 1 with the automatic stop operation is assumed to easily occur if no deceleration suppression operation has been executed. In other words, the higher posture stability indicates the higher durability with respect to a fall of the lean vehicle 1 with the automatic stop operation.

For example, the acquisition section 21 can acquire posture stability information based on traveling posture information on the lean vehicle 1. The traveling posture information is information related to a traveling posture of the lean vehicle 1, and may be information related to a change in the traveling posture of the lean vehicle 1, for example. The acquisition section 21 can acquire posture stability information, for example, based on the traveling posture information on the lean vehicle 1 in a state of automatically decelerating by the positional relationship adjustment operation. Further, as is described later, the acquisition section 21 may acquire posture stability information based on the traveling posture information on the lean vehicle 1 in a state where no automatic deceleration is performed (specifically, a state where the deceleration is temporarily suspended in the middle of the deceleration, or the like).

The abovementioned traveling posture information can include, for example, lean angle information on the lean vehicle 1. In other words, the acquisition section 21 may acquire posture stability information based on the lean angle information on the lean vehicle 1. The lean angle information is information related to a lean angle of the lean vehicle 1, for example, which is information indicating a value of the lean angle, rough information in which the magnitude of the lean angle is expressed in several stages, information indicating a value of a change rate of the lean angle, rough information in which the magnitude of the change rate of the lean angle is expressed in several stages, or information that can be substantially converted into the information. For example, the acquisition section 21 can acquire lean angle information based on a detection result of the inertial measurement device 16. Note that, the acquisition section 21 may acquire lean angle information, for example, by applying image processing to an image with a road surface imaged, which is obtained by a camera mounted to the lean vehicle 1.

For example, as the lean angle of the lean vehicle 1 is larger, the lean vehicle 1 is more likely to fall down in the roll direction when the lean vehicle 1 is stopped. Therefore, for example, if the lean angle is smaller than a reference lean angle, the acquisition section 21 acquires information indicating that the posture stability of the lean vehicle 1 is higher than the reference, as posture stability information. On the other hand, if the lean angle is larger than a reference lean angle, the acquisition section 21 acquires information indicating that the posture stability of the lean vehicle 1 is lower than the reference, as posture stability information. The abovementioned reference lean angle is set to a value to the extent that allows a determination as to whether a fall of the lean vehicle 1 with the automatic stop operation is likely to occur in a case where no deceleration suppression operation is executed.

The abovementioned traveling posture information can include, for example, yaw rate information on the lean vehicle 1. In other words, the acquisition section 21 may acquire posture stability information based on the yaw rate information on the lean vehicle 1. The yaw rate information is information related to a yaw rate of the lean vehicle 1, for example, which is information indicating a value of the yaw rate, rough information in which the magnitude of the yaw rate is expressed in several stages, information indicating a value of a change rate of the yaw rate, rough information in which the magnitude of the change rate of the yaw rate is expressed in several stages, or information that can be substantially converted into the information. For example, the acquisition section 21 can acquire yaw rate information based on a detection result of the inertial measurement device 16.

For example, as the yaw rate of the lean vehicle 1 is larger, the lean angle of the lean vehicle 1 becomes larger, and the lean vehicle 1 is more likely to fall down in the roll direction when the lean vehicle 1 is stopped. Therefore, for example, if the yaw rate is smaller than a reference yaw rate, the acquisition section 21 acquires information indicating that the posture stability of the lean vehicle 1 is higher than the reference, as posture stability information. On the other hand, if the yaw rate is larger than a reference yaw rate, the acquisition section 21 acquires information indicating that the posture stability of the lean vehicle 1 is lower than the reference, as posture stability information. The abovementioned reference yaw rate is set to a value to the extent that allows a determination as to whether a fall of the lean vehicle 1 with the automatic stop operation is likely to occur in a case where no deceleration suppression operation is executed.

The abovementioned traveling posture information can include, for example, steering angle information on the lean vehicle 1. In other words, the acquisition section 21 may acquire posture stability information based on the steering angle information on the lean vehicle 1. The steering angle information is information related to a steering angle of the lean vehicle 1, for example, which is information indicating a value of the steering angle, rough information in which the magnitude of the steering angle is expressed in several stages, information indicating a value of a change rate of the steering angle, rough information in which the magnitude of the change rate of the steering angle is expressed in several stages, or information that can be substantially converted into the information. For example, the acquisition section 21 can acquire steering angle information based on a detection result of the steering angle sensor 17.

For example, as the steering angle of the lean vehicle 1 is larger, the lean angle of the lean vehicle 1 becomes larger, and the lean vehicle 1 is more likely to fall down in the roll direction when the lean vehicle 1 is stopped. Therefore, for example, if the steering angle is smaller than a reference steering angle, the acquisition section 21 acquires information indicating that the posture stability of the lean vehicle 1 is higher than the reference, as posture stability information. On the other hand, if the steering angle is larger than a reference steering angle, the acquisition section 21 acquires information indicating that the posture stability of the lean vehicle 1 is lower than the reference, as posture stability information. The abovementioned reference steering angle is set to a value to the extent that allows a determination as to whether a fall of the lean vehicle 1 with the automatic stop operation is likely to occur in a case where no deceleration suppression operation is executed.

Note that, a rider of the lean vehicle 1 swings the handlebars in left and right directions to balance the lean vehicle 1 in some cases. In such a case, the posture stability of the lean vehicle 1 becomes high. Therefore, for example, if the acquisition section 21 has determined that the handlebars are swung in the left and right directions based on the steering angle information, the acquisition section 21 acquires information indicating that the posture stability of the lean vehicle 1 is higher than the reference, as posture stability information.

In the above, as examples of the traveling posture information, the lean angle information, the yaw rate information, and the steering angle information have been described. Further, as traveling posture information, information other than the information described in the above may be used. For example, as traveling posture information, lateral acceleration information on the lean vehicle 1 may be used. The lateral acceleration information is information related to a lateral acceleration of the lean vehicle 1, for example, which is information indicating a value of the lateral acceleration, rough information in which the magnitude of the lateral acceleration is expressed in several stages, information indicating a value of a change rate of the lateral acceleration, rough information in which the magnitude of the change rate of the lateral acceleration is expressed in several stages, or information that can be substantially converted into the information. For example, the acquisition section 21 can acquire the lateral acceleration information based on a detection result of the inertial measurement device 16.

For example, as the lateral acceleration of the lean vehicle 1 is larger, the lean angle of the lean vehicle 1 becomes larger, and the lean vehicle 1 is more likely to fall down in the roll direction when the lean vehicle 1 is stopped. Therefore, for example, if the lateral acceleration is smaller than a reference lateral acceleration, the acquisition section 21 acquires information indicating that the posture stability of the lean vehicle 1 is higher than the reference, as posture stability information. On the other hand, if the lateral acceleration is larger than a lateral acceleration, the acquisition section 21 acquires information indicating that the posture stability of the lean vehicle 1 is lower than the reference, as posture stability information. The abovementioned reference lateral acceleration is set to a value to the extent that allows a determination as to whether a fall of the lean vehicle 1 with the automatic stop operation is likely to occur in a case where no deceleration suppression operation is executed.

In the above, the example in which posture stability information is acquired based on the traveling posture information on the lean vehicle 1 has been described. Further, the acquisition section 21 may acquire posture stability information based on information other than the traveling posture information. For example, the acquisition section 21 may acquire posture stability information based on boarding state information on a rider or a fellow passenger of the lean vehicle 1. The boarding state information is information related to a boarding state of a rider or a fellow passenger of the lean vehicle 1, for example, which can include posture information or the like on the rider or the fellow passenger of the lean vehicle 1. For example, the acquisition section 21 can acquire boarding state information based on detection results of various kinds of sensors such as a seating sensor. In this manner, information that is used to acquire posture stability information only needs to be information related to the ease of a fall of the lean vehicle 1.

In the above, the various kinds of examples that are used to acquire posture stability information have been described. Further, information that is used to acquire posture stability information may be information other than the examples mentioned above. Moreover, as information that is used to acquire posture stability information, multiple types of information may be used together. For example, as information that is used to acquire posture stability information, multiple types of information arbitrarily selected in the examples mentioned above may be used together.

If it has been determined that posture stability information is information indicating that the posture stability of the lean vehicle 1 is higher than the reference (Step S102/YES), the processing proceeds to Step S103. Further, at Step S103, the execution section 22 permits the stop of the lean vehicle 1 by the automatic stop operation. On the other hand, if it has been determined that posture stability information is information indicating that the posture stability of the lean vehicle 1 is lower than the reference (Step S102/NO), the processing proceeds to Step S104. Further, at Step S104, the execution section 22 executes an operation of prohibiting the stop of the lean vehicle 1 by the automatic stop operation, as a deceleration suppression operation. Next to Step S103 or Step S104, the control flow illustrated in Fig. 3 ends.

If the execution section 22 has prohibited the stop of the lean vehicle 1 by the automatic stop operation at Step S104, the execution section 22 maintains the speed of the lean vehicle 1 to a lower limit speed, for example. The lower limit speed can be set to, for example, a speed corresponding to the lower limit value in a speed region in which the lean vehicle 1 can travel while maintaining the posture without falling down. For example, if the execution section 22 has prohibited the stop of the lean vehicle 1 by the automatic stop operation at Step S104, the execution section 22 firstly decreases the speed of the lean vehicle 1 to the lower limit speed from a time point when the stop of the lean vehicle 1 by the automatic stop operation has been prohibited. Further, after the speed of the lean vehicle 1 has reached the lower limit speed, the execution section 22 maintains the speed of the lean vehicle 1 to the lower limit speed. Accordingly, the execution section 22 can cause the lean vehicle 1 to travel after having prohibited the stop of the lean vehicle 1 by the automatic stop operation.

As has been described in the foregoing, in the first processing, the execution section 22 executes the operation of prohibiting the stop of the lean vehicle 1 by the automatic stop operation, as the deceleration suppression operation that is an operation of suppressing the deceleration of the lean vehicle 1 more in a case where the posture stability information is information indicating that the posture stability is low than in a case where the posture stability information is information indicating that the posture stability is high, in an executable state of the automatic stop operation. Accordingly, in accordance with the ease of a fall of the lean vehicle 1 with the automatic stop operation, an execution propriety of the stop of the lean vehicle 1 by the automatic stop operation can be optimized. For example, in a case where it is assumed that a fall of the lean vehicle 1 with the automatic stop operation is likely to occur when no deceleration suppression operation has been executed, the stop of the lean vehicle 1 by the automatic stop operation can be prohibited. Therefore, the safety of the lean vehicle 1 can be improved.

Moreover, the control flow illustrated in Fig. 3, which has been described in the above, is repeatedly executed during the execution of the adaptive cruise control, for example. Therefore, after it has been determined as NO at Step S102 and the stop of the lean vehicle 1 by the automatic stop operation has been prohibited at Step S104, it is determined as YES at Step S102 in some cases. In that case, the stop of the lean vehicle 1 by the automatic stop operation is permitted at Step S103. In other words, in the first processing, during the execution of the deceleration suppression operation, the execution section 22 cancels the deceleration suppression operation based on the posture stability information. Accordingly, in a case where it is assumed that a fall of the lean vehicle 1 with the automatic stop operation is not likely to occur even when no deceleration suppression operation has been executed, unnecessary prohibition of the stop of the lean vehicle 1 by the automatic stop operation can be suppressed.

Fig. 4 is a flowchart illustrating one example of a flow of second processing that is performed by the control device 20. Step S201 in Fig. 4 corresponds to a start of a control flow illustrated in Fig. 4. Step S204 in Fig. 4 corresponds to an end of the control flow illustrated in Fig. 4. The control flow illustrated in Fig. 4 is repeatedly executed at a set time interval, for example, in an executable state of the automatic stop operation. For example, the control flow illustrated in Fig. 4 is repeatedly executed during the execution of the adaptive cruise control. In particular, the control flow illustrated in Fig. 4 may be executed under a situation in which the lean vehicle 1 automatically decelerates by the positional relationship adjustment operation, during the execution of the adaptive cruise control.

The second processing in Fig. 4 is different from the abovementioned first processing in Fig. 3, in comparison therewith, in that Step S103 and Step S104 are respectively replaced with Step S202 and Step S203.

In the second processing in Fig. 4, if it has been determined as YES at Step S102 (in other words, if it has been determined that the posture stability of the lean vehicle 1 is higher than the reference), the processing proceeds to Step S202. Further, at Step S202, the execution section 22 switches the setting of deceleration characteristics in the adaptive cruise control (for example, a parameter value) to a first setting. On the other hand, if it has been determined as NO at Step S102 (in other words, if it has been determined that the posture stability of the lean vehicle 1 is lower than the reference), the processing proceeds to Step S203. Further, at Step S203, the execution section 22 switches the setting of deceleration characteristics in the adaptive cruise control to a second setting. Next to Step S202 or Step S203, the control flow illustrated in Fig. 4 ends.

In the adaptive cruise control, deceleration characteristics are set, and the speed of the lean vehicle 1 is controlled such that deceleration characteristics of the lean vehicle 1 become the set characteristics. The deceleration characteristics are characteristics related to the deceleration, and can include, for example, characteristics of the deceleration, characteristics of the deceleration change rate, or the like. For example, in the adaptive cruise control, as deceleration characteristics, a deceleration upper limit value and a deceleration change rate upper limit value are set. The execution section 22 controls the deceleration of the lean vehicle 1 so as to be equal to or lower than the deceleration upper limit value, in the adaptive cruise control. Moreover, the execution section 22 controls the deceleration change rate of the lean vehicle 1 so as to be equal to or lower than the deceleration change rate upper limit value, in the adaptive cruise control.

The deceleration upper limit value in the second setting is smaller than the deceleration upper limit value in the first setting. In other words, the execution section 22 executes an operation of lowering the deceleration to be generated to the lean vehicle 1 more if it has been determined that the posture stability information is information indicating that the posture stability of the lean vehicle 1 is lower than the reference than if it has been determined that the posture stability information is information indicating that the posture stability of the lean vehicle 1 is higher than the reference, as the deceleration suppression operation.

Moreover, the deceleration change rate upper limit value in the second setting is lower than the deceleration change rate upper limit value in the first setting. In other words, the execution section 22 executes an operation of decreasing the deceleration change rate to be generated in the lean vehicle 1 more if it has been determined that the posture stability information is information indicating that the posture stability of the lean vehicle 1 is lower than the reference than if it has been determined that the posture stability information is information indicating that the posture stability of the lean vehicle 1 is higher than the reference, as the deceleration suppression operation.

As has been described in the foregoing, in the second processing, the execution section 22 executes, as the deceleration suppression operation, an operation of decreasing the deceleration and the deceleration change rate to be generated to the lean vehicle 1 more in the case where the posture stability information is information indicating that the posture stability is low than in the case where the posture stability information is information indicating that the posture stability is high, in an executable state of the automatic stop operation. Accordingly, in accordance with the ease of a fall of the lean vehicle 1 with the automatic stop operation, the deceleration characteristics of the lean vehicle 1 can be optimized. For example, in a case where it is assumed that a fall of the lean vehicle 1 with the automatic stop operation is likely to occur when no deceleration suppression operation has been executed, the deceleration and the deceleration change rate to be generated to the lean vehicle 1 can be made low. Therefore, the safety of the lean vehicle 1 can be improved.

Moreover, the control flow illustrated in Fig. 4, which has been described in the above, is repeatedly executed during the execution of the adaptive cruise control, for example. Therefore, after it has been determined as NO at Step S102 and the setting of the deceleration characteristics has been switched to the second setting at Step S203, it is determined as YES at Step S102 in some cases. In that case, the setting of the deceleration characteristics is switched to the first setting at Step S202. In other words, in the second processing, during the execution of the deceleration suppression operation, the execution section 22 cancels the deceleration suppression operation based on the posture stability information. Accordingly, in a case where it is assumed that a fall of the lean vehicle 1 with the automatic stop operation is not likely to occur even when no deceleration suppression operation has been executed, unnecessary reduction of the deceleration upper limit value and the deceleration change rate upper limit value can be suppressed.

In the above, the example in which the execution section 22 reduces both of the deceleration upper limit value and the deceleration change rate upper limit value, as the deceleration suppression operation, has been described. Further, the execution section 22 may reduce only either one of the deceleration upper limit value and the deceleration change rate upper limit value, as the deceleration suppression operation.

Moreover, for example, the execution section 22 may decrease the deceleration to be generated to the lean vehicle 1 by a method other than the reduction of the deceleration upper limit value, in the deceleration suppression operation. For example, the execution section 22 may decrease the deceleration to be generated to the lean vehicle 1 by reducing the target deceleration itself in the adaptive cruise control.

Moreover, for example, the execution section 22 may decrease the deceleration change rate to be generated to the lean vehicle 1 by a method other than the reduction of the deceleration change rate upper limit value, in the deceleration suppression operation. For example, the execution section 22 may decrease the deceleration change rate to be generated to the lean vehicle 1 by reducing the target deceleration change rate itself in the adaptive cruise control.

Moreover, for example, the deceleration characteristics of the lean vehicle 1 may change in not two stages but more multiple stages (in other words, three or more stages), or may continuously change.

Fig. 5 is a flowchart illustrating one example of a flow of third processing that is performed by the control device 20. Step S301 in Fig. 5 corresponds to a start of a control flow illustrated in Fig. 5. Step S304 in Fig. 5 corresponds to an end of the control flow illustrated in Fig. 5. The control flow illustrated in Fig. 5 is repeatedly executed at a set time interval, for example, in an executable state of the automatic stop operation. For example, the control flow illustrated in Fig. 5 is repeatedly executed during the execution of the adaptive cruise control. In particular, the control flow illustrated in Fig. 5 may be executed under a situation in which the lean vehicle 1 automatically decelerates by the positional relationship adjustment operation, during the execution of the adaptive cruise control.

The third processing in Fig. 5 is different from the abovementioned first processing in Fig. 3, in comparison therewith, in that Step S103 and Step S104 are respectively replaced with Step S302 and Step S303.

In the third processing in Fig. 5, if it has been determined as YES at Step S102 (in other words, if it has been determined that the posture stability of the lean vehicle 1 is higher than the reference), the processing proceeds to Step S302. Further, at Step S302, the execution section 22 continues or restarts the positional relationship adjustment operation in the adaptive cruise control. Specifically, at Step S302, the positional relationship adjustment operation is continued if the positional relationship adjustment operation is executed, and the positional relationship adjustment operation is restarted if the positional relationship adjustment operation is not executed. On the other hand, if it has been determined as NO at Step S102 (in other words, if it has been determined that the posture stability of the lean vehicle 1 is lower than the reference), the processing proceeds to Step S303. Further, at Step S303, the execution section 22 executes an operation of cancelling the positional relationship adjustment operation in the adaptive cruise control, as the deceleration suppression operation. Next to Step S302 or Step S303, the control flow illustrated in Fig. 5 ends.

As has been described in the foregoing, in the third processing, the execution section 22 executes the operation of cancelling the positional relationship adjustment operation, as the deceleration suppression operation that is an operation of suppressing the deceleration of the lean vehicle 1 more in the case where the posture stability information is information indicating that the posture stability is low than in a case where the posture stability information is information indicating that the posture stability is high, in an executable state of the automatic stop operation. Accordingly, in accordance with the ease of a fall of the lean vehicle 1 with the automatic stop operation, the execution propriety of the positional relationship adjustment operation can be optimized. For example, in a case where it is assumed that a fall of the lean vehicle 1 with the automatic stop operation is likely to occur when no deceleration suppression operation has been executed, the positional relationship adjustment operation is cancelled, whereby the deceleration and eventually the stop of the lean vehicle 1 can be prevented. Therefore, the safety of the lean vehicle 1 can be improved.

Moreover, the control flow illustrated in Fig. 5, which has been described in the above, is repeatedly executed during the execution of the adaptive cruise control, for example. Therefore, after it has been determined as NO at Step S102 and the positional relationship adjustment operation has been cancelled at Step S303, it is determined as YES at Step S102 in some cases. In that case, the positional relationship adjustment operation is restarted at Step S302. For example, after the positional relationship adjustment operation has been cancelled at Step S303, only if it has been determined as YES at Step S102 and the rider has performed an operation to permit the restart of positional relationship adjustment operation, the positional relationship adjustment operation is restarted. In other words, in the third processing, during the execution of the deceleration suppression operation, the execution section 22 cancels the deceleration suppression operation based on the posture stability information. Accordingly, in a case where it is assumed that a fall of the lean vehicle 1 with the automatic stop operation is not likely to occur even when no deceleration suppression operation has been executed, continuous unnecessary cancel of the positional relationship adjustment operation can be suppressed.

In the foregoing, as the processing examples that are performed by the control device 20, the first processing, the second processing, and the third processing have been described. Further, the processing that is performed by the control device 20 may be processing in which the processing examples described in the above have been changed.

For example, the execution section 22 may execute a notification operation of notifying the rider of the lean vehicle 1 of the deceleration suppression operation. The execution section 22 may execute the notification operation before the deceleration suppression operation is started, or may execute the notification operation during the execution of the deceleration suppression operation, for example.

The execution section 22 may notify the rider of the presence or absence of the execution of the deceleration suppression operation, in the notification operation, for example. For example, in the first processing in Fig. 3, the execution section 22 may notify the rider of executing in the future or currently executing the operation of prohibiting the stop of the lean vehicle 1 by the automatic stop operation as the deceleration suppression operation. Moreover, for example, in the second processing in Fig. 4, the execution section 22 may notify the rider of executing in the future or currently executing the operation of decreasing at least either one of the deceleration and the deceleration change rate to be generated to the lean vehicle 1. Moreover, for example, in the third processing in Fig. 5, the execution section 22 may notify the rider of executing in the future or currently executing the operation of cancelling the positional relationship adjustment operation as the deceleration suppression operation.

The execution section 22 may notify the rider of an aspect of the deceleration suppression operation to be executed, in the notification operation, for example. For example, in the first processing in Fig. 3, if the execution section 22 has prohibited the stop of the lean vehicle 1 by the automatic stop operation, the execution section 22 may notify the rider of the speed of the lean vehicle 1 being maintained to the lower limit speed. For example, in the second processing in Fig. 4, the execution section 22 may notify the rider of information indicating the setting of deceleration characteristics in the adaptive cruise control. For example, in the third processing in Fig. 5, if the positional relationship adjustment operation is cancelled after a predetermined time has elapsed from the timing when it has been determined as NO at Step S102, the execution section 22 may notify the rider of information indicating the timing when the positional relationship adjustment operation is cancelled.

The abovementioned notification operation is executed before the deceleration suppression operation is started, so that the rider can grasp in advance the execution of the deceleration suppression operation in the future, and the aspect of the deceleration suppression operation to be executed in the future. The abovementioned notification operation is executed during the execution of the deceleration suppression operation, so that the rider can grasp that the deceleration suppression operation is currently executed and the aspect of the deceleration suppression operation that is currently executed.

Note that, the execution section 22 may notify the rider of information other than the information mentioned above, for example, in the notification operation. For example, the execution section 22 may notify the rider of posture stability information on the lean vehicle 1, in the notification operation. Accordingly, the rider can drive the lean vehicle 1 after grasping the posture stability of the lean vehicle 1.

In the above, the various kinds of examples of information to be notified by the notification operation have been described. Further, the information to be notified by the notification operation may be information other than the examples mentioned above. Moreover, in the notification operation, multiple types of information may be notified. For example, in the notification operation, multiple types of information arbitrarily selected in the examples mentioned above may be notified.

The execution section 22 executes the notification operation by using the display device 13, for example. Further, the notification operation is not limited to the example. For example, the execution section 22 may execute the notification operation by using a display device that is provided to an attached object (for example, helmet) of the rider. Moreover, for example, the execution section 22 may execute the notification operation by using a sound output device that is provided to the lean vehicle 1 or the attached object of the rider. Moreover, for example, the execution section 22 may execute the notification operation by using a vibration generation device that is provided to the lean vehicle 1 or the attached object of the rider. Moreover, for example, the execution section 22 may execute the notification operation by causing instantaneous acceleration and deceleration to be generated to the lean vehicle 1. In this case, the instantaneous acceleration and deceleration may be performed using a drive source (for example, the engine 11) of the lean vehicle 1, may be performed using the control unit (for example, the hydraulic pressure control unit 12) of a braking force to be generated to the wheel, or may be performed using a transmission mechanism of the lean vehicle 1.

Moreover, for example, the processing (first processing in Fig. 3 in the above) of executing the operation of prohibiting the stop of the lean vehicle 1 by the automatic stop operation as the deceleration suppression operation, the processing (second processing in Fig. 4 in the above) of decreasing at least one of the deceleration and the deceleration change rate to be generated to the lean vehicle 1 as the deceleration suppression operation, and the processing (third processing in Fig. 5 in the above) of executing the operation of cancelling the positional relationship adjustment operation as the deceleration suppression operation have been described respectively in the above. Multiple types of processing arbitrarily selected in the processing may be combined. In other words, as the deceleration suppression operation, multiple types of the operations may be performed.

For example, if it has been determined that the posture stability information is information indicating that the posture stability of the lean vehicle 1 is lower than the reference, the execution section 22 may execute both of the operation of prohibiting the stop of the lean vehicle 1 by the automatic stop operation and the operation of decreasing at least one of the deceleration and the deceleration change rate to be generated to the lean vehicle 1, as the deceleration suppression operations. In this case, the execution section 22 may decrease at least one of the deceleration and the deceleration change rate when the speed of the lean vehicle 1 is caused to decrease to the lower limit speed from the time point when the stop of the lean vehicle 1 by the automatic stop operation has been prohibited, for example.

For example, if it has been determined that the posture stability information is information indicating that the posture stability of the lean vehicle 1 is lower than the reference, the execution section 22 may execute both of the operation of prohibiting the stop of the lean vehicle 1 by the automatic stop operation and the operation of cancelling the positional relationship adjustment operation, as the deceleration suppression operations. In this case, for example, the execution section 22 decreases the speed of the lean vehicle 1 to the lower limit speed from the time point when the stop of the lean vehicle 1 by the automatic stop operation has been prohibited to maintain the speed of the lean vehicle 1 to the lower limit speed. Thereafter, the execution section 22 cancels the positional relationship adjustment operation.

For example, if it has been determined that the posture stability information is information indicating that the posture stability of the lean vehicle 1 is lower than the reference, the execution section 22 may execute both of the operation of decreasing at least one of the deceleration and the deceleration change rate to be generated to the lean vehicle 1 and the operation of cancelling the positional relationship adjustment operation, as the deceleration suppression operations. In this case, the execution section 22 decreases at least one of the deceleration and the deceleration change rate, in the positional relationship adjustment operation, for example, and thereafter cancels the positional relationship adjustment operation.

Note that, if it has been determined that the posture stability information is information indicating that the posture stability of the lean vehicle 1 is lower than the reference, the execution section 22 may execute all of the operation of prohibiting the stop of the lean vehicle 1 by the automatic stop operation, the operation of decreasing at least one of the deceleration and the deceleration change rate to be generated to the lean vehicle 1, and the operation of cancelling the positional relationship adjustment operation, as the deceleration suppression operations.

Moreover, for example, the example in which the automatic stop operation is an operation of causing the lean vehicle 1 to automatically decelerate and stop by the positional relationship adjustment operation has been described in the above. Further, the automatic stop operation is not limited to the abovementioned example, but may be an operation in which no positional relationship adjustment operation is performed under a part of the situation, or may be an operation of causing the lean vehicle 1 to stop only when the rider has performed a specific operation.

For example, in a case where the speed of the lean vehicle 1 is reduced to be less than a threshold value as a result of execution of the positional relationship adjustment operation, the execution section 22 may suspend the positional relationship adjustment operation to automatically decelerate and stop the lean vehicle 1 at a deceleration set in advance. The abovementioned threshold value is set, for example, to a speed to the extent that specially causes the necessity of a decrease in the deceleration in order to stabilize the posture of the lean vehicle 1. For example, the deceleration after the positional relationship adjustment operation has been suspended is set to a small value, whereby the posture of the lean vehicle 1 can be stabilized immediately before the lean vehicle 1 stops.

For example, in a case where the speed of the lean vehicle 1 is reduced to be less than a threshold value as a result of execution of the positional relationship adjustment operation, the execution section 22 may suspend the deceleration of the lean vehicle 1 by suspending the positional relationship adjustment operation, and may automatically decelerate and stop the lean vehicle 1 in a case where the rider performs a specific operation that indicates a stop intention. In this case, the acquisition section 21 can acquire posture stability information based on traveling posture information on the lean vehicle 1 in a state where the positional relationship adjustment operation is suspended, for example. In other words, the acquisition section 21 may acquire posture stability information based on traveling posture information on the lean vehicle 1 in a state where the automatic deceleration is not performed. Note that, in a case where the abovementioned specific operation has been performed, the execution section 22 may automatically decelerate and stop the lean vehicle 1 by restarting the positional relationship adjustment operation, or may automatically decelerate and stop the lean vehicle 1 at the deceleration set in advance without restarting the positional relationship adjustment operation.

Even in a case where the automatic stop operation is each operation mentioned above, the execution section 22 can improve the safety of the lean vehicle 1 by executing the deceleration suppression operation based on the posture stability information, as mentioned above.

### <Effect of Control Device>

Effects of the control device 20 according to the embodiment of the present invention will be described.

The control device 20 is provided with the execution section 22 that executes a positional relationship adjustment operation of adjusting a positional relationship between the lean vehicle 1 and an object so as to be a target positional relationship, based on surrounding environment information on the lean vehicle 1. Further, the execution section 22 executes, in an executable state of an automatic stop operation of causing the lean vehicle 1 automatically decelerated by the positional relationship adjustment operation to automatically reach a stop, a deceleration suppression operation that is an operation of suppressing deceleration of the lean vehicle 1 more when posture stability information is information indicating that posture stability in a process in which the lean vehicle 1 automatically reaches the stop is low than when the posture stability information is information indicating that the posture stability is high . Accordingly, in an executable state of the automatic stop operation, the speed of the lean vehicle 1 can be adjusted in accordance with the posture stability of the lean vehicle 1. Therefore, the fall of the lean vehicle 1 with the automatic stop operation can be suppressed in accordance with the posture stability of the lean vehicle 1. Therefore, the safety of the lean vehicle 1 can be improved.

Preferably, in the control device 20, during the execution of the deceleration suppression operation, the execution section 22 cancels the deceleration suppression operation based on the posture stability information. Accordingly, in a case where it is assumed that a fall of the lean vehicle 1 with the automatic stop operation is not likely to occur even when no deceleration suppression operation has been executed, unnecessary execution of the deceleration suppression operation can be suppressed.

Preferably, in the control device 20, the deceleration suppression operation is an operation of prohibiting the stop of the lean vehicle 1 by the automatic stop operation. Accordingly, in accordance with the ease of a fall of the lean vehicle 1 with the automatic stop operation, an execution propriety of the stop of the lean vehicle 1 by the automatic stop operation can be optimized. For example, in a case where it is assumed that a fall of the lean vehicle 1 with the automatic stop operation is likely to occur when no deceleration suppression operation has been executed, the stop of the lean vehicle 1 by the automatic stop operation can be prohibited. Therefore, the safety of the lean vehicle 1 can be improved.

Preferably, in the control device 20, the deceleration suppression operation is an operation of setting a deceleration to be generated to the lean vehicle 1 lower than that when the posture stability information is information indicating that the posture stability is high . Accordingly, in accordance with the ease of a fall of the lean vehicle 1 with the automatic stop operation, the deceleration characteristics of the lean vehicle 1 can be optimized. For example, in a case where it is assumed that a fall of the lean vehicle 1 with the automatic stop operation is likely to occur when no deceleration suppression operation has been executed, the deceleration to be generated to the lean vehicle 1 can be made low. Therefore, the safety of the lean vehicle 1 can be improved.

Preferably, in the control device 20, the deceleration suppression operation is an operation of setting a deceleration change rate to be generated to the lean vehicle 1 lower than that when the posture stability information is information indicating that the posture stability is high . Accordingly, in accordance with the ease of a fall of the lean vehicle 1 with the automatic stop operation, the deceleration characteristics of the lean vehicle 1 can be optimized. For example, in a case where it is assumed that a fall of the lean vehicle 1 with the automatic stop operation is likely to occur when no deceleration suppression operation has been executed, the deceleration change rate to be generated to the lean vehicle 1 can be made low. Therefore, the safety of the lean vehicle 1 can be improved.

Preferably, in the control device 20, the deceleration suppression operation is an operation of cancelling the positional relationship adjustment operation. Accordingly, in accordance with the ease of a fall of the lean vehicle 1 with the automatic stop operation, the execution propriety of the positional relationship adjustment operation can be optimized. For example, in a case where it is assumed that a fall of the lean vehicle 1 with the automatic stop operation is likely to occur when no deceleration suppression operation has been executed, the positional relationship adjustment operation is cancelled, whereby the deceleration and eventually the stop of the lean vehicle 1 can be prevented. Therefore, the safety of the lean vehicle 1 can be improved.

Preferably, in the control device 20, the execution section 22 executes a notification operation of notifying the rider of the lean vehicle 1 of the deceleration suppression operation. Accordingly, the rider can drive the lean vehicle 1 after grasping information related to the deceleration suppression operation.

Preferably, in the control device 20, the execution section 22 notifies the rider of the presence or absence of the execution of the deceleration suppression operation, in the notification operation. Accordingly, the rider can grasp that the deceleration suppression operation is executed in the future or the deceleration suppression operation is currently executed.

Preferably, in the control device 20, the execution section 22 notifies the rider of an aspect of the deceleration suppression operation to be executed, in the notification operation. Accordingly, the rider can grasp the aspect of the deceleration suppression operation that is executed in the future or the aspect or the deceleration suppression operation that is currently executed.

Preferably, in the control device 20, the posture stability information is acquired based on traveling posture information on the lean vehicle 1. Accordingly, the posture stability information can be appropriately acquired by taking the traveling posture of the lean vehicle 1 into account.

Preferably, in the control device 20, the posture stability information is acquired based on the traveling posture information on the lean vehicle 1 in a state of automatically decelerating. Accordingly, by taking the traveling posture of the lean vehicle 1 in a state of automatically decelerating into account, information indicating a posture stability in the process in which the lean vehicle 1 automatically reaches the stop can be acquired more appropriately as posture stability information.

Preferably, in the control device 20, the traveling posture information includes lean angle information on the lean vehicle 1. Accordingly, by focusing on lean angle information, acquiring the posture stability information by taking the traveling posture of the lean vehicle 1 into account can be appropriately implemented.

Preferably, in the control device 20, the traveling posture information includes yaw rate information on the lean vehicle 1. Accordingly, by focusing on the yaw rate information, acquiring posture stability information by taking the traveling posture of the lean vehicle 1 into account can be appropriately implemented.

Preferably, in the control device 20, the traveling posture information includes steering angle information on the lean vehicle 1. Accordingly, by focusing on steering angle information, acquiring the posture stability information by taking the traveling posture of the lean vehicle 1 into account can be appropriately implemented.

The invention is not limited the description of the embodiment. For example, only a part of the embodiment may be executed.

### Reference Signs List

1: Lean vehicle
11: Engine
12: Hydraulic pressure control unit
13: Display device
14: Input device
15: Surrounding environment sensor
16: Inertial measurement device
17: Steering angle sensor
18f: Front-wheel wheel speed sensor
18r: Rear-wheel wheel speed sensor
20: Control device
21: Acquisition section
22: Execution section

## Claims

1. A control device (20) that controls a behavior of a lean vehicle (1), the control device comprising:
an execution section (22) that executes a positional relationship adjustment operation of adjusting a positional relationship between the lean vehicle (1) and an object so as to be a target positional relationship, based on surrounding environment information on the lean vehicle (1), wherein
the execution section (22)
executes, in an executable state of an automatic stop operation of causing the lean vehicle (1) automatically decelerated by the positional relationship adjustment operation to automatically reach a stop, a deceleration suppression operation that is an operation of suppressing deceleration of the lean vehicle (1) more when posture stability information is information indicating that posture stability in a process in which the lean vehicle (1) automatically reaches the stop is low than when the posture stability information is information indicating that the posture stability is high.

2. The control device according to claim 1, wherein the execution section (22) cancels, during when the deceleration suppression operation is executed, the deceleration suppression operation based on the posture stability information.

3. The control device according to claim 1 or 2, wherein the deceleration suppression operation is an operation of prohibiting the stop.

4. The control device according to claim 1 or 2, wherein the deceleration suppression operation is an operation of setting a deceleration to be generated to the lean vehicle (1) lower than that when the posture stability information is information indicating that the posture stability is high.

5. The control device according to claim 1 or 2, wherein the deceleration suppression operation is an operation of setting a deceleration change rate to be generated to the lean vehicle (1) lower than that when the posture stability information is information indicating that the posture stability is high.

6. The control device according to claim 1 or 2, wherein the deceleration suppression operation is an operation of canceling the positional relationship adjustment operation.

7. The control device according to claim 1 or 2, wherein the execution section (22) executes a notification operation of notifying a rider of the lean vehicle (1) of the deceleration suppression operation.

8. The control device according to claim 7, wherein the execution section (22) notifies the rider of a presence or absence of execution of the deceleration suppression operation, in the notification operation.

9. The control device according to claim 7, wherein the execution section (22) notifies the rider of an aspect of the deceleration suppression operation to be executed, in the notification operation.

10. The control device according to claim 1, wherein the posture stability information is acquired based on traveling posture information on the lean vehicle (1).

11. The control device according to claim 10, wherein the posture stability information is acquired based on the traveling posture information on the lean vehicle (1) in a state of automatically decelerating.

12. The control device according to claim 10 or 11, wherein the traveling posture information includes lean angle information on the lean vehicle (1).

13. The control device according to claim 10 or 11, wherein the traveling posture information includes yaw rate information on the lean vehicle (1).

14. The control device according to claim 10 or 11, wherein the traveling posture information includes steering angle information on the lean vehicle (1).

15. A control method of controlling a behavior of a lean vehicle (1), the control method comprising:
executing, by an execution section (22) of a control device (20), a positional relationship adjustment operation of adjusting a positional relationship between the lean vehicle (1) and an object so as to be a target positional relationship, based on surrounding environment information on the lean vehicle (1) wherein
the execution section (22)
executes, in an executable state of an automatic stop operation of causing the lean vehicle (1) automatically decelerated by the positional relationship adjustment operation to automatically reach a stop, a deceleration suppression operation that is an operation of suppressing deceleration of the lean vehicle (1) more when posture stability information is information indicating that posture stability in a process in which the lean vehicle (1) automatically reaches the stop is low than when the posture stability information is information indicating that the posture stability is high.
